# EUROPEAN PATENT SPECIFICATION

(11) **EP 2 017 481 B1**
(45) Date of publication and mention of the grant of the patent: **24.08.2011**
(21) Application number: 08159279.2
(22) Date of filing: 27.06.2008
(51) Int. Cl.: F04D 25/10, F04D 27/02

(54) **Ventilation group for flow reversal**
Lüftungsaggregat zur Strömungsumkehrung
Groupe de ventilation pour inversion de flux

(30) Priority: 12.07.2007 IT TO20070515
(43) Date of publication of application: 21.01.2009
(73) Proprietor: ENTSORGA ITALIA S.P.A., 15057 Tortona (AL) (IT)
(72) Inventor: Cella Mazzariol, Pietro Paolo, 15057 Tortona (AL) (IT); Galanzino, Gianfrancesco, 15057 Tortona (AL) (IT)
(74) Representative: Robba, Pierpaolo

(56) References cited:
- CH-A- 190 492
- DE-A1- 3 224 277
- JP-A- 3 092 600
- US-A- 4 310 020
- US-B1- 6 207 447

## Description

The present invention concerns a ventilation group capable of reversing a gas flow according to two opposite directions.

More precisely, the present invention concerns a. ventilation group capable of reversing, according to two opposite directions, a gas flow generated by a fan, without reversing the fan rotation direction.

In particular, the present invention concerns a. ventilation group capable of reversing, according to two opposite directions, a gas flow that can be applied to plants for the aerobic treatment of organic wastes.

An example of a plant for the aerobic treatment of organic wastes is disclosed in GB 1 381 848. Said plant, that comprises an enclosed room, having a ventilating support surface on which waste heaps are placed, uses a blower for sucking or blowing air through the heaps. That solution is limited from the operating standpoint, in that the blower, unless its rotation direction is reversed, can only operate by sucking or blowing air in the same direction.

Another exemplary plant for the aerobic treatment of organic wastes is disclosed in European Patent No. EP 1 431 262, in the name of the same Applicant.

Such a plant, housed within an enclosed building, has a ventilated paving or floor on which heaps of organic wastes are deposited, the aerobic treatment of said organic wastes taking place through a phase of fermentation/bio-oxidation performed by means of forced air. Said plant further includes means for generating an alternating air flow in two opposite directions, through said paving and said heaps, which means preferably consist of fans, pairs of three-way valves and by-passes for reversing in continuous manner the air flow generated by said fans.

A drawback of the above solution is its construction and management complexity, resulting in a non-negligible resource burden: indeed, a rather complex circuit is to be provided where each valve requires a dedicated actuator, what makes the system very onerous.

The above solution is moreover limited from the operating standpoint, in that each assembly formed by a fan, valves and by-passes can only operate either by sucking used-up air from the room containing the organic wastes in order to exhaust that air to the outside, or by sucking fresh air from the outside to blow it into the room containing said organic wastes.

Systems for reversing the direction of a gas flow without stopping or changing the fan rotation direction are also known, e.g. from U.S. Patent No. US 1,959,106, said systems operating thanks to a set of stationary propellers and partitions that are axially moved as an integral unit by means of a single actuator, whereby the gas flow can simultaneously flow according two opposite directions.

Other examples of said kind of systems are disclosed in the German Patent application No. DE 32 24 277 A1 (D1) as well as in the U.S. Patent No. 4,310,020 (D2).

D1 contains all the Features of the preamble of claim 1 and discloses a regenerative heat recovery system comprising at least a regenerative heat exchanger with an air permeable storage mass 14 through which a first and a second air flows alternately flow; according to a preferred embodiment of the invention of D1, the reversal of the convection direction of the external air and of the exhaust air through the storage mass 14 is obtained by means of a multi-path air duct arrangement equipped with eight throttle valves 40, four of which are placed at the four outlet ports of the radial fan 16" and the four others are placed in inflow channels leading to the two inlets 41 of the radial fan 16", said double sided sucking radial fan 16", as visible in Figures 6 to 8 of D1, having a square housing 44 with two inlet ports 41 through which the shaft 46 of the impeller 47 axially passes.

D2 discloses an air flow reversal apparatus comprising air supply and return port means and corresponding supply and return ducts, and supply and return damper means movably operable for selectively shut off or open said ducts.

Neither D1 nor D2 disclose a ventilation group comprising throttle valves arranged in line, oriented at 90° relative to each other and controlled by a single actuator, as the ventilation group according to the present invention has.

The Applicant has now found a solution that allows generating a flow alternating according two opposite directions and moreover, optionally, sucking fresh air from the outside, by using a single fan and a valve set controlled by a single actuator.

Advantageously, in the ventilation group for flow reversal according to the invention, the fan operates in continuous manner and without reversing its rotation direction, whereas flow reversal takes place by acting only on the valves by means of a single actuator.

Advantageously, moreover, the ventilation group for flow reversal according to the invention is very compact and has a limited number of moving mechanical parts, what contributes to keeping the installation and management costs limited.

The ventilation group for flow reversal according to the present invention will now be described in greater detail with reference to the accompanying drawings, given by way of non-limiting examples, in which:
- Fig. 1 is a perspective view of one side of the ventilation group according to the invention, in partially open condition;
- Fig. 2 is a perspective view of the opposite side of the ventilation group shown in Fig. 1;
- Fig. 3 is a schematic side view of the ventilation group according to the invention, showing the fan and the valve actuating system;
- Fig. 4 shows a detail of Fig. 3, illustrating the offset of the valve pairs;
- Figs. 5A and 5B show the operation of the ventilation group according to the two views shown in Figs. 1 and 2, respectively, where the suction of used-up air from the paving of the plant for the treatment of organic wastes and the subsequent exhaust of the same used-up air are performed;
- Figs. 6A and 6B show the operation of the ventilation group according to the two views shown in Figs. 1 and 2, respectively, where the suction of fresh air from the external environment and the blowing of the same fresh air into the paving of the plant for the treatment of organic wastes are performed;
- Figs. 7A and 7B show the operation of the ventilation group according to the two views shown in Figs. 1 and 2, respectively, where the suction of used-up air from a manifold of the plant for the treatment of organic wastes and the blowing of the same used-up air to the paving of the plant for the treatment of organic wastes are performed;
- Figs. 8A and 8B show the operation of the ventilation group according to the two views shown in Figs. 1 and 2, respectively, where the suction of used-up air from the paving of the plant for the treatment of organic wastes and the subsequent exhaust of the same used-up air are performed;
- Fig. 9A shows the ventilation group according to the invention, associated with a plant for the treatment of organic wastes and sucking from the paving of the same plant;
- Fig. 9B shows the ventilation group according to the invention, associated with a plant for the treatment of organic wastes and blowing into the paving of the same plant;
- Fig. 10 is a schematic representation of the ventilation group according to the invention, where the gas flow paths inside said ventilation group are highlighted; and
- Fig. 11 is a schematic representation of the ventilation group according to the alternative embodiment of the invention, where the gas flow paths inside said ventilation group are highlighted.

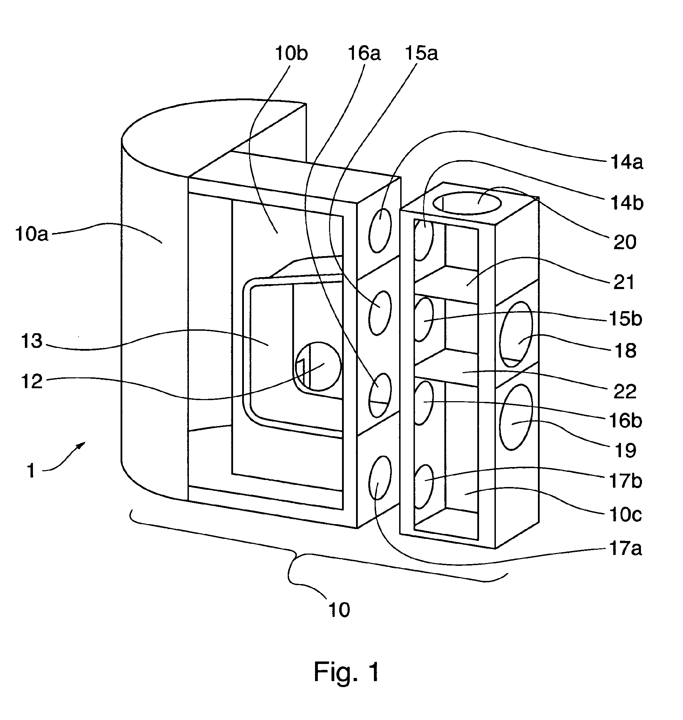

Referring to Figures 1 to 4, it can be seen that ventilation group 1 comprises a suitably shaped housing 10, to be connected to a fan 2 which is to move the air flow to be processed, by conferring it the desired flow rate, prevalence and direction.

Housing 10, in the illustrated embodiment, comprises three different sections: a first section 10a, which in the illustrated example has a half-cylinder shape, a second section 10b, which in the illustrated example has a parallelepiped shape with rectangular cross section, and a third section 10c, which in the illustrated example has a parallelepiped shape with square cross section. Yet, any other shape of housing 10 enabling the flow direction reversal can be adopted, for instance a shape including a single section or only two sections of housing 10 in place of the three sections provided by the illustrated embodiment.

The second section 10b is connected, at one end, to the first section 10a so as to form an L-shaped structure, and, at the end opposite with respect to said first section 10a, it is connected to the third section 10c, which therefore forms an extension thereof. Said "L" shape favours the positioning of fan 2, which usually is equipped with a suction duct 2a and a delivery duct 2b arranged at 90° relative to each other, but also other shapes can be adopted.

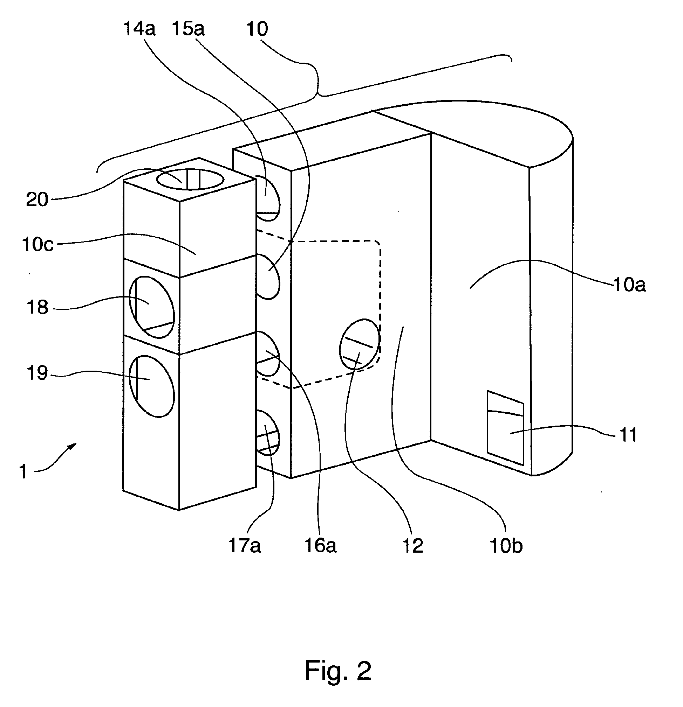

The first section 10a is substantially empty and has a first opening 11, shown in Fig. 2, preferably intended for connection of delivery duct 2b of fan 2.

The second section 10b, which has a second opening 12, also shown in Fig. 2 and preferably intended for connecting suction duct 2a of fan 2, includes a baffle 13 and four first internal holes 14a, 15a, 16a and 17a. Said baffle 13 is so located that it internally encloses central holes 15a and 16a out of said four first internal holes as well as said second opening 12.

The third section 10c includes four second internal holes 14b, 15b, 16b and 17b corresponding to and facing said first internal holes 14a, 15a, 16a and 17a, so as to define the seats of valves V1, V2, V3 and V4. The third section 10c further includes at least one first and one second external holes 18 and 19, which in the illustrated example are located on the face opposite that having said four second internal holes l4b, 15b, 16b and 17b, and a third external hole 20. In the illustrated embodiment, the third hole is horizontally located on the face opposite the face by which said third section 10c rests on the ground, but it can also be differently located, for instance on the same vertical face as that having said first and second external holes 18 and 19. The third section 10c further includes at least first and second partitions 21 and 22, which can be movable and are preferably located upstream and downstream said first external hole 18, respectively.

In the illustrated embodiment, the first external hole 18 is intended for connection with the external environment and fresh air to be sent to the plant for waste treatment is sucked from the external environment just through said first external hole 18.

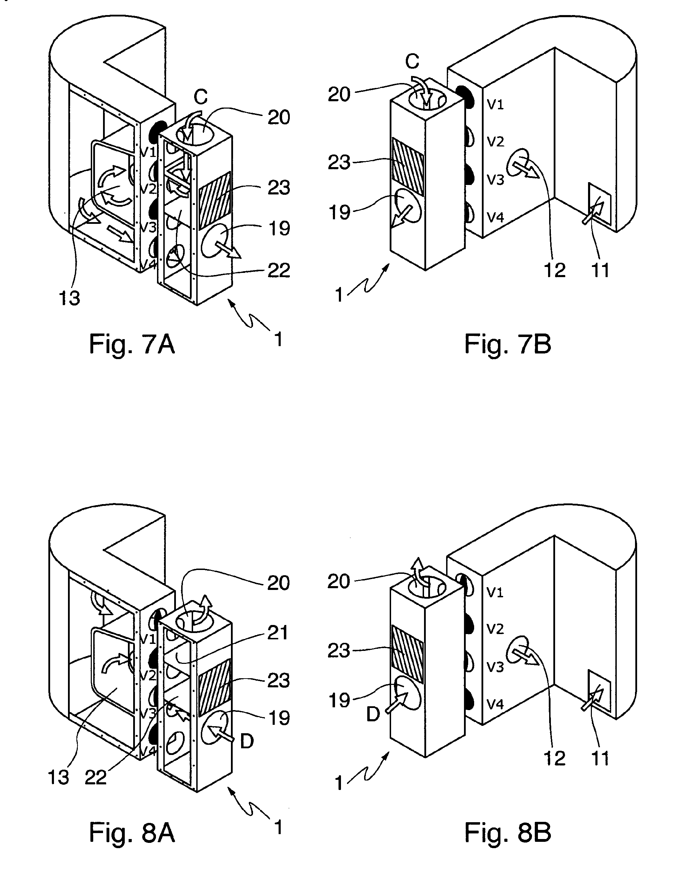

In an alternative embodiment of the present invention, which will be disclosed in detail later on, said first external hole 18 is closed by a closing plate 23, shown in Figs. 7A, 7B and 8A, 8B.

The second external hole 19 is intended for connection with the ventilated paving or floor of the plant for waste treatment and, just through said second external hole 19, either used-up air is sucked that is to be sent to the outside, preferably after having been treated in a suitable bio-filter, and/or to a manifold of the plant for waste treatment, or fresh or used up air is blown to the paving itself.

The third external hole 20 is intended for connection to a bio-filter and/or a manifold of the plant for waste treatment, and depurated used-up air can be exhausted to the external environment just through said third external hole 20. In an alternative embodiment of the present invention, said third external hole 20 can be connected to the manifold collecting used-up air from the plant for waste treatment, as disclosed below with reference to Figs. 7A, 7B and 8A, 8B.

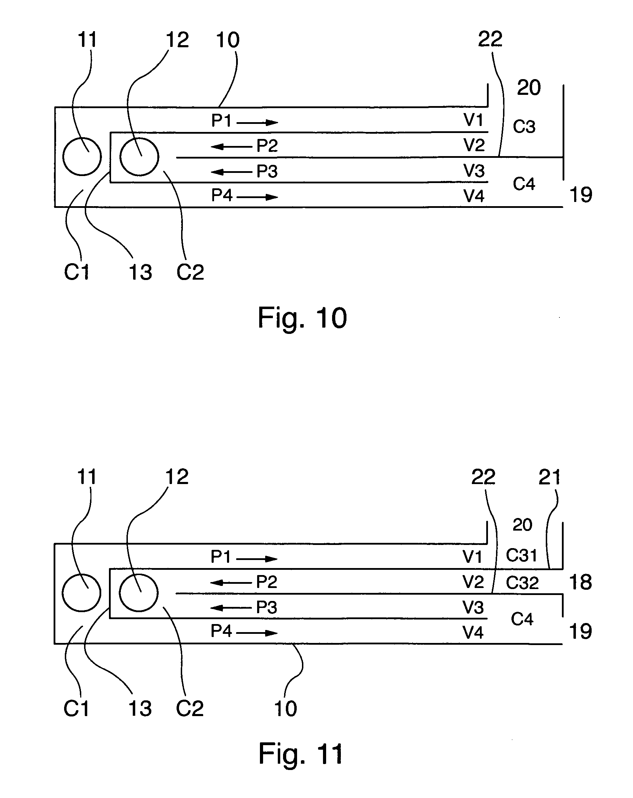

Turning to Fig. 10, where ventilation group 1 according to the invention is schematically shown, it can be seen that, thanks to the provision of baffle 13, two spaces communicating with suction duct 2a and delivery duct 2b, respectively, of fan 2 are defined inside housing 10. More precisely, there are defined:
- a first chamber C1, defined outside said baffle 13 and communicating with said first opening 11, which chamber receives the flow blown by fan 2;
- a second chamber C2, defined inside said baffle 13 and communicating with said second opening 12, wherefrom the flow is sucked into fan 2;
- a first pair of paths P1 and P4 for the ventilation flow, associated with said first chamber C1 external to baffle 13;
- a second pair of paths P2 and P3 for the ventilation flow, associated with said second chamber C2 internal to baffle 13;
- a third chamber C3 associated with a first path P1 in said first pair of paths P1 and P4 and a first path P2 in said second pair of paths P2 and P3, said third chamber C3 being equipped with the third external hole 20;
- a fourth chamber C4 associated with a second path P3 in said second pair of paths P2 and P3 and a second path P4 in said first pair of paths P1 and P4, said fourth chamber C4 being equipped with the second external hole 19;
wherein said paths P1, P2, P3 and P4 are intercepted by corresponding valves V1, V2, V3 and V4 that may take, in pairs, a closed or an open configuration such that only one path at a time in each pair of paths is activated, whereas the other two paths are deactivated.

In this embodiment valve V1 intercepts path P1, valve V2 intercepts path P2, valve V3 intercepts path P3 and valve V4 intercepts path P4.

Turning to Fig. 11, where ventilation group 1 according to the alternative embodiment of the invention is schematically shown, it can be seen that said third chamber C3 is divided into two sub-chambers C31 and C32, where said first sub-chamber C31 is equipped with the third external hole 20 and is associated with said first path P1 in said first pair of paths P1 and P4, and said second sub-chamber C32 is equipped with the first external hole 18 and is associated with said first path P2 in said second pair of paths P2 and P3.

In such an alternative embodiment of the present invention, valve V1 intercepts said path P1, valve V2 intercepts said path P2, valve V3 intercepts said path P3 and valve V4 intercepts said path P4.

As it can be seen in Figs. 10 and 11, the flows passing through said valves V1 and V4 flow in opposite direction with respect to those passing through said valves V2 and V3 and, more precisely, in the suction and the delivery directions, respectively, of fan 2.

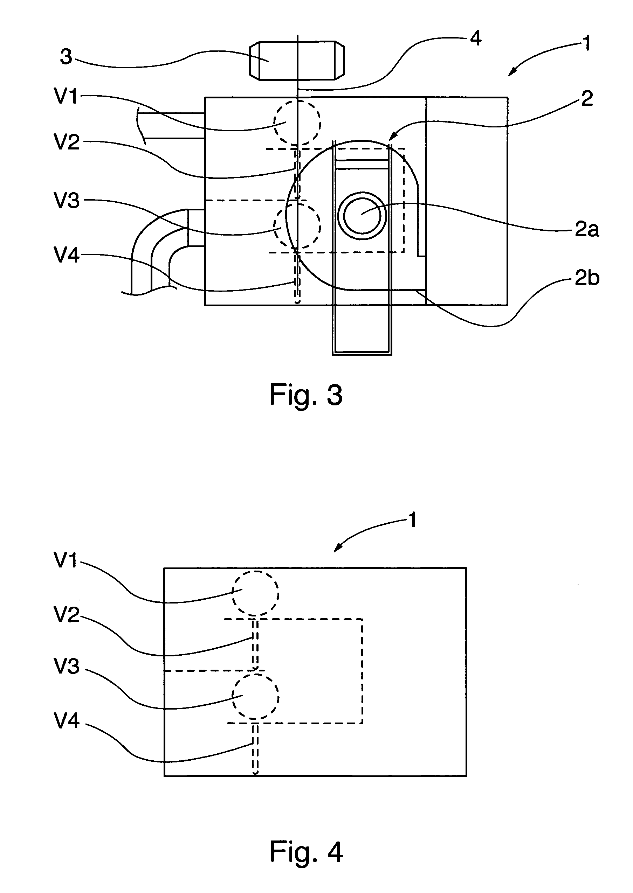

Turning to Figs. 3 and 4, it can be seen that four valves, preferably throttle valves, V1, V2, V3 and V4, are mounted inside housing 10. Said valves, when suitably actuated, adjust the direction of the gas flow, whilst the flow rate and the relevant prevalence of the gas flow are adjusted, for instance, by means of a frequency modulator acting upon the fan motor by adjusting its speed.

The four valves V1, V2, V3 and V4 are simultaneously actuated by a single linear actuator 3, preferably an electric motor, connected to the valves through a rotatable rod or a connecting rod-crank mechanism 4.

The four valves V1, V2, V3 and V4 are mounted in the seats formed by the pairs of first and second internal holes 14a, 14b, 15a, 15b, 16a, 16b and 17a, 17b, respectively. More particularly, in the illustrated example, such valves, besides being mounted in line, are initially positioned so that opening and closing thereof is offset, so as to allow reversal of the air flow to be processed by rotating the single rod 4: otherwise stated, it is necessary that valves V1 and V3 are open and valves V2 and V4 are closed or vice versa. For that reason, in the illustrated example, valves V1 and V3 are arranged parallel to each other and oriented at 90° relative to valves V2 and V4.

When the air flow is to be reversed, the position of each of said four valves V1, V2, V3 and V4 will be switched thanks to the movement of linear actuator 3, resulting in a configuration where valves V1 and V3 are closed and valves V2 and V4 are open, or vice versa.

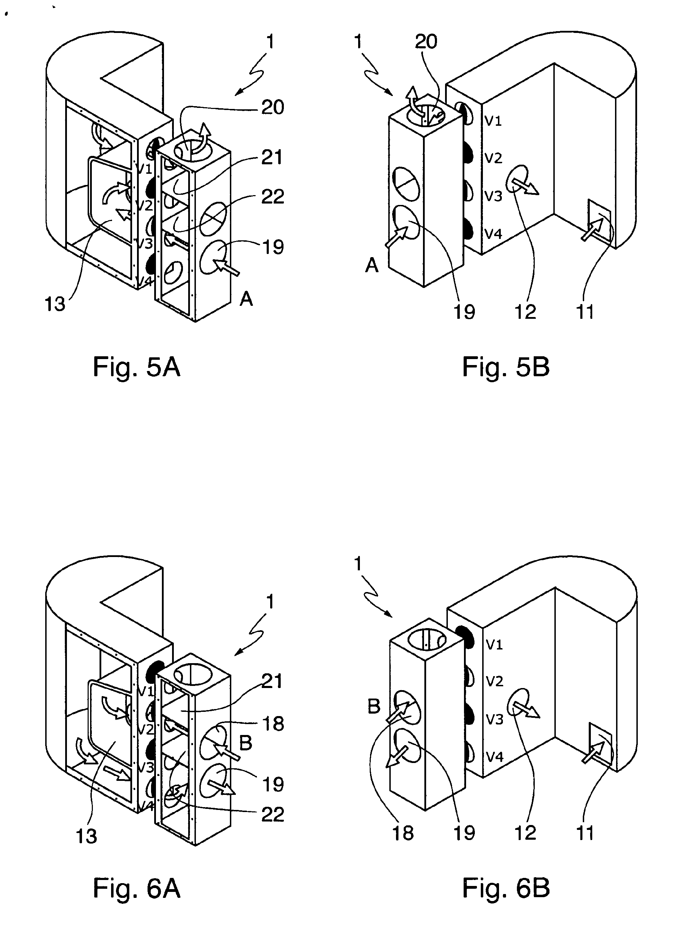

Turning now to Figs. 5A to 8B, the operation of the ventilation group according to the present invention will be described in detail. By convention, four different flow types, which will be referred to in following description, are herein defined:
- flow A is a flow of used-up air that it sucked from the paving of the plant for waste treatment and sent to the external environment after having processed in a bio-filter;
- flow B is an air flow coming from the external environment and sent to the paving of the plant for waste treatment;
- flow C is a flow of used-up air that is sucked from a manifold of the plant for the treatment of organic wastes and is sent to the paving of the plant for waste treatment;
- flow D is a flow of used-up air that is sucked from the paving of the plant for waste treatment and is sent either to the external environment, after having processed in a bio-filter, or to the manifold of the plant for the treatment of organic wastes, or partly to the external environment and partly to the manifold.

Figs. 5A and 5B schematically show the operation of the ventilation group assuming an application with flow A, i.e. in the direction from the paving to the bio-filter.

Figs. 6A and 6B schematically show the operation of the ventilation group assuming an application with flow B, i.e. in the direction from the external environment to the paving.

Figs. 7A and 7B schematically show the operation of the ventilation group assuming an application with flow C, i.e. in the direction from the manifold to the paving.

Figs. 8A and 8B schematically show the operation of the ventilation group assuming an application with flow D, i.e. in the direction from the paving to the bio-filter and/or the manifold..

Referring to Figs. 5A and 5B, the operation of the ventilation group according to the invention, for instance for obtaining an A-type flow, i.e. a flow from the paving to the bio-filter, is achieved with the following valve configuration: .
V1 --> OPEN
V2 --> CLOSED
V3 --> OPEN
V4 --> CLOSED

Such a valve configuration results in sucking used-up air from the paving through the second external hole 19 and sending the same used-up air to the bio-filter through the third external hole 20. More particularly, the flow of used-up air from the paving enters the third section 10c through the second external hole 19, passes along said third section 10c in the space below the second partition 22, enters the space defined by baffle 13 through the open third valve V3, it is sucked by fan 2 through the second opening 12 and is sent to the first section 10a through the first opening 11. After having passed along the second section 10b, such a flow enters again said third section 10c through the first valve V1, also open, and eventually it is exhausted towards the bio-filter through the third external hole 20.

Referring to Figs. 6A and 6B, the operation of the ventilation group according to the invention, for instance for obtaining a B-type flow, i.e. a flow from the external environment to the paving, is achieved with the following valve configuration: .
V1 --> CLOSED
V2 --> OPEN
V3 --> CLOSED
V4 --> OPEN

Such a valve configuration results in sucking fresh air from the environment through the first external hole 18 and blowing the same fresh air into the paving through the second external hole 19. More particularly, the flow of fresh air from the external environment enters the third section 10c through the first external hole 18, passes along said third section 10c in the space defined between the first and second partitions 21 and 22, enters the space defined by baffle 13 through the open second valve V2, it is sucked by fan 2 through the second opening 12 and is sent to the first section 10a through the first opening 11. After having passed along the second section 10b, such a flow enters again said third section 10c through the fourth valve V4, also open, and it is exhausted towards the paving through the second external hole 19.

In the alternative embodiment of the present invention, referred to as "used-up air recovery" and shown in Figs. 7A, 7B, 8A and 8B, ventilation group 1 is substantially the same as in the main embodiment described hereinbefore, with the following modifications:
i) provision of a closing plate 23 onto the first external hole 18 admitting fresh air from the external environment, so as to prevent such an admission;
ii) removal of the first partition 21 in the third section 10c of housing 10 of ventilation group 1.

Such a configuration may be attained also by making a first section 10c lacking the first external hole 18 and/or lacking the first partition 21.

Ventilation group 1 according to such an alternative embodiment can operate in two different ways, disclosed in detail hereinafter.

Referring to Figs. 7A and 7B, the operation of the ventilation group according to the alternative embodiment of the invention, for instance for obtaining a C-type flow, i.e. a flow from the manifold to the paving, is achieved with the following valve configuration: .
V1 --> CLOSED
V2 --> OPEN
V3 --> CLOSED
V4 --> OPEN

Such a configuration results in sucking used-up air from the manifold of the plant for waste treatment, which conveys the process used-up air through the third external hole 20, and in blowing the same used-up air into the paving through the second external hole 19. More particularly, the flow of used-up air from the manifold enters the third section 10c through the third external hole 20, passes along said third section 10c in the space defined above the second partition 22, enters the space defined by baffle 13 through the open second valve V2, it is sucked by fan 2 through the second opening 12 and is sent to the first section 10a through the first opening 11. After having passed along the second section 10b, such a flow enters again said third section 10c through the fourth valve V4, also open, and it is exhausted towards the paving through the second external hole 19.

Referring to Figs. 8A and 8B, the operation of the ventilation group according to the alternative embodiment of the invention, for instance for obtaining a D-type flow, i.e. from the paving to the bio-filter and/or the manifold, is achieved by changing the position of or closing the first partition 21 and with the following valve configuration: .
V1 --> OPEN
V2 --> CLOSED
V3 --> OPEN
V4 --> CLOSED

Such a configuration results in sucking used-up air from the paving through the second external hole 19 and in exhausting the same used-up air towards the bio-filter and/or the manifold through the third external hole 20. More particularly, the flow of used-up air from the paving enters the third section 10c through the second external hole 19, passes along said third section 10c in the space defined below the second partition 22, enters the space defined by baffle 13 through the open third valve V3, it is sucked by fan 2 through the second opening 12 and sent to the first section 10a through the first opening 11. After having passed along the second section 10b, such a flow enters again said third section 10c through the first valve V1, also open, and eventually it is exhausted towards the manifold through the third external hole 20.

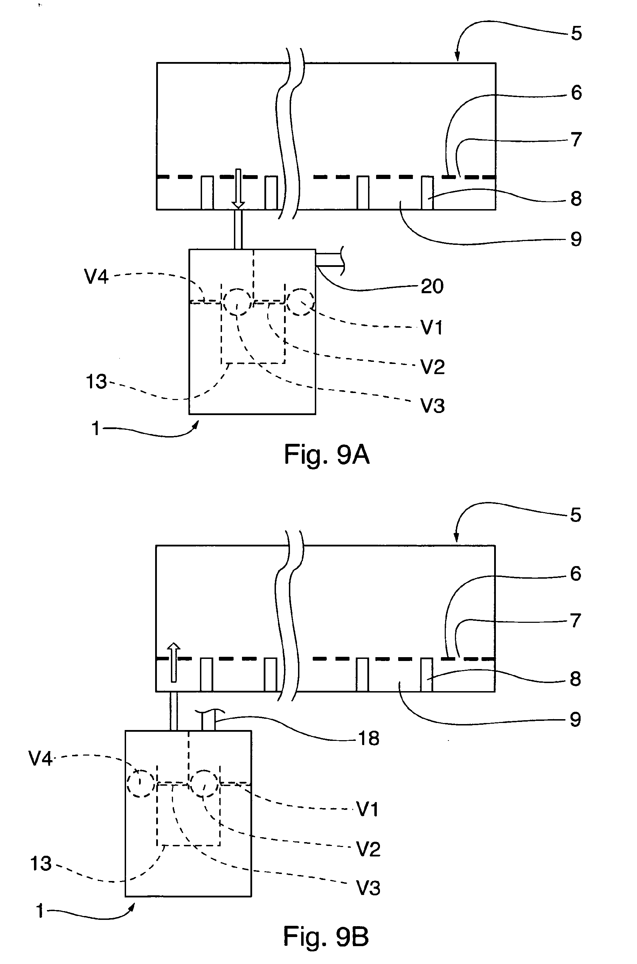

Referring to Figs. 9A and 9B, there is shown an exemplary assembly formed by the ventilation group according to the present invention associated with a plant 5 for the treatment of organic wastes. Said plant 5 is of the kind described in the above-mentioned European Patent No. EP 1 431 262 and, therefore, comprises a ventilated paving or floor on which heaps of organic wastes to be treated are deposited, the aerobic treatment of said organic wastes taking place through a phase of fermentation/bio-oxidation performed by means of forced air.

Said ventilated paving comprises a plurality of tiles 6 having openings 7 and resting upon partitions 8 so as to form a pressure equalising plenum 9 under the tiles.

More particularly, Fig. 9A shows ventilation group 1 when sucking from the paving of plant 5: as shown, valves V1 and V3 are open and valves V2 and V4 are closed, so that an A-type or a D-type flow is obtained.

On the contrary, Fig. 9B shows ventilation group 1 when blowing to the paving of plant 5: as shown, valves V2 and V3 are closed and valves V2 and V4 are open, so that a B-type or a C-type flow is obtained.

Air flow reversal, i.e. the passage from the phase of sucking from the paving to that of blowing to the paving, and vice versa, is determined, preferably in automatic manner, by detecting significant parameters of the microbial activity, such as the 02 content and the temperature of the material or the air deriving therefrom. Such parameters, individually or in combination, allow adjusting the waste treatment process by following management schemes that are developed according to known kinetics or kinetics determined for the purpose.

The ventilation group according to the present invention is preferably made of metal materials, such as steel, or other materials capable of resisting the possible chemical attack by certain components possibly present in particular in the flow of used-up air from the plant for the aerobic treatment of organic wastes.

The preceding detailed description clearly shows the advantages inherent in using the ventilation group for flow reversal according to the present invention, more particularly:
- operation flexibility;
- constructional simplicity and compactness;
- simplicity and rapidity by which the flow direction reversal is achieved, what allows minimising management times;
- minimisation of moving mechanical parts, with the resulting reduction of wear and dead times for maintenance interventions.

It is clear that the ventilation group for flow reversal according to the present invention, described here with reference to a preferred embodiment and to a variant given by way of non-limiting examples, can be modified in manners known to the skilled in the art, without thereby departing from the scope of the present invention. In particular, the ventilation group for flow reversal according to the present invention has been envisaged for use in combination with plants for the aerobic treatment of organic wastes of the kind described in European Patent No. EP 1 431 262, but it can be advantageously applied in all production plants requiring an air flow reversal.

## Claims

1. A ventilation group (1) for flow reversal, comprising a fan (2) associated with a housing (10) inside which there are defined:
- a first chamber (C1) receiving the flow blown by the fan (2);
- a second chamber (C2) from which the flow is sucked into the fan (2);
- a first pair of paths (P1, P4) for the ventilation flow, associated with said first chamber (C1);
- a second pair of paths (P2, P3) for the ventilation flow, associated with said second chamber (C2);
- a third chamber (C3) associated with a first path (P1) in said first pair of paths (P1, P4) and a first path (P2) in said second pair of paths (P2, P3);
- a fourth chamber (C4) associated with a second path (P4) in said first pair of paths (P1, P4) and a second path (P3) in said second pair of paths (P2, P3);
wherein said paths (P1, P2, P3, P4) are intercepted by corresponding valves (V1, V2, V3, V4) that may take, in pairs, a closed or an open configuration such that only one path at a time in each pair of paths is activated, whereas the other two paths are deactivated, **characterised in that** said valves (V1, V2, V3, V4) are controlled by a single actuator (3) and are throttle valves arranged in line and oriented at 90° relative to each other.

2. The ventilation group (1) as claimed in claim 1, wherein said third chamber (C3) is divided into two sub-chambers (C31, C32), a first sub-chamber (C31) being associated with said first path (P1) in said first pair of paths (P1, P4) and a second sub-chamber (C32) being associated with said first path (P2) in said second pair of paths (P2, P3).

3. The ventilation group (1) as claimed in claim 1 or 2, wherein said housing (10) includes:
- a baffle (13) externally defining said first chamber (C1) and internally defining said second chamber (C2);
- a first opening (11) and a second opening (12) for connecting said fan (2) with said housing (10), said first opening (11) and said second opening (12) being associated with said first chamber (C1) and said second chamber (C2), respectively;
- a first external hole (18) associated with one path in said second pair of paths (P2, P3) and/or a second external hole (19) associated with one path in said first pair of paths (P1, P4) and one path in said second pair of paths (P2, P3), and a third external hole (20) associated with one path in said first pair of paths (P1, P4);
- first internal holes (14a, 15a, 16a, 17a) and second internal holes (14b, 15b, 16b, 17b) facing said first internal holes (14a, 15a, 16a, 17a)., each of said first and second internal holes being associated with a corresponding one of said paths (P1, P2, P3, P4).

4. The ventilation group (1) as claimed in claim 3, wherein said valves (V1, V2, V3, V4) are mounted in seats formed by said first internal holes (14a, 15a, 16a, 17a) and said second internal holes (14b, 15b, 16b, 17b).

5. The ventilation group (1) as claimed in claim 3, wherein said housing (10) includes a first section (10a) with a half-cylinder shape, a second section (10b) shaped as a parallelepiped with rectangular cross section, and a third section (10c) shaped as a parallelepiped with square cross section, said sections being connected to one another.

6. The ventilation group (1) as claimed in claim 5, wherein said second section (10b) is connected, at one end, to said first section (10a) so as to form an L-shaped structure, and is connected, at the end opposite with respect to said first section (10a), to said third section (10c), which therefore forms an extension thereof, said L-shaped structure favouring the positioning of a fan (2) equipped with a suction duct (2a) and a delivery duct (2b) arranged at 90° relative to each other.

7. The ventilation group (1) as claimed in claim 6, wherein said first section (10a) is substantially empty and includes said first opening (11) for the connection of the delivery duct (2b) of the fan (2).

8. The ventilation group (1) as claimed in claim 6, wherein said second section (10b) includes said second opening (12) for connection of the suction duct (2a) of the fan (2), said four first internal holes (14a, 15a, 16a, 17a) and said baffle (13), said baffle (13) being so located that it internally encloses the central holes (15a, 16a) among said four first internal holes as well as said second opening (12).

9. The ventilation group (1) as claimed in claim 6, wherein said third section (10c) includes said four second internal holes (14b, 15b, 16b, 17b) corresponding to and facing said four first internal holes (14a, 15a, 16a, 17a), and said first external hole (18) and/or second external hole (19) and third external hole (20), said first (18) and/or second (19) external holes being located on the face opposite that having said four second internal holes (14b, 15b, 16b, 17b), said third external hole (20) being located on the face opposite the face by which said third section (10c) rests on the ground, and wherein a first partition (21) and/or a second partition (22) are provided upstream and downstream said first external hole (18).

10. The ventilation group (1) as claimed in claim 9, wherein said third section (10c) further includes a closing plate (23) that can be placed on said first external hole (18).

11. The ventilation group (1) as claimed in claim 9, wherein said first partition (21) is movable.

12. A plant (5) for the treatment of organic wastes, **characterised in that** it includes a ventilation group (1) as claimed in any of claims 1 to 11.

13. The plant as claimed in claim 12, wherein the ventilation group (1) is configured so as to suck air from the environment outside said plant.

14. The plant as claimed in claim 12, wherein the ventilation group (1) is configured so as to suck used-up air from the environment inside said plant (5).

## Patentansprüche

1. Lüftungsaggregat (1) zur Strömungsumkehrung, umfassend einen Lüfter (2) der einem Gehäuse (10) zugeordnet ist, innerhalb dessen definiert sind:
- eine Kammer (C1 welche die von dem Lüfter (2) geblasene Strömung aufnimmt;
- eine zweite Kammer (C2), aus welcher die Strömung in den Lüfter (2) hineingesogen wird;
- ein erstes Paar Wege (P1, P4) für die Lüftungsströmung, wobei dieses Paar Wege der ersten Kammer (C1) zugeordnet ist;
- ein zweites Paar Wege (P2, P3) für die Lüftungsströmung, wobei dieses Paar Wege der zweiten Kammer (C2) zugeordnet ist;
- eine dritte Kammer (C3), die einem ersten Weg (P1) des ersten Wegpaars (P1, P4) und einem ersten Wege (P2) des zweiten Wegpaars (P2, P3) zugeordnet ist;
- eine vierte Kammer (C4), die einem zweiten Weg (P4) des ersten Wegpaars (P1, P4) und einem zweiten Weg (P3) des zweiten Wegpaars (P2, P3) zugeordnet ist;
wobei die Wege (P1, P2, P3, P4) durch entsprechende Ventile (V1, V2, V3, V4) unterbrochen werden, die paarweise eine geschlossene oder offene Stellung einnehmen können, sodass nur ein Weg in jedem Wegepaar auf einmal aktiviert wird, während die beiden anderen Wege deaktiviert werden,
**dadurch gekennzeichnet, dass** die Ventile (V1, V2, V3, V4) durch einen einzigen Aktor (3) gesteuert werden und Drosselventile sind, die in einer Reihe angeordnet und um 90° zueinander ausgerichtet sind.

2. Lüftungsaggregat (1) nach Anspruch 1, wobei die dritte Kammer (C3) in zwei Unterkammern (C31, C32) unterteilt ist, wobei eine erste Unterkammer (C31) dem ersten Weg (P1) des ersten Wegpaars (P1, P4) zugeordnet ist und eine zweite Unterkammer (C32) dem ersten Weg (P2) des zweiten Wegpaars (P2, P3) zugeordnet ist.

3. Lüftungsaggregat (1) nach Anspruch 1 oder 2, wobei das Gehäuse (10) aufweist:
- eine Ablenkplatte (13), die die erste Kammer (C1) äußerlich und die zweite Kammer (C2) innerlich definiert;
- eine erste Öffnung (11) und eine zweite Öffnung (12) zum Verbinden des Lüfters (2) mit dem Gehäuse (10), wobei die erste Öffnung (11) und die zweite Öffnung (12) der ersten Kammer (C1) bzw. der zweiten Kammer (C2) zugeordnet sind;
- ein erstes Außenloch (18), das einem Weg des zweiten Wegpaars (P2, P3) zugeordnet ist, und/oder ein zweites Außenloch (19), das einem Weg des ersten Wegpaars (P1, P4) und einem Weg des zweiten Wegpaars (P2, P3) zugeordnet ist, und ein drittes Außenloch (20), das einem Weg des ersten Wegpaars (P1, P4) zugeordnet ist;
- erste Innenlöcher (14a, 15a, 16a, 17a) und zweite Innenlöcher (14b, 15b, 16b, 17b), die den ersten Innenlöchern (14a, 15a, 16a, 17a) zugewandt sind, wobei jedes der ersten und zweiten Innenlöcher einem entsprechenden Weg der Wege (P1, P2, P3, P4) zugeordnet ist.

4. Lüftungsaggregat (1) nach Anspruch 3, wobei die Ventile (V1, V2, V3, V4) in Sitzen gelagert sind, die von den ersten Innenlöcher (14a, 15a, 16a, 17a) und den zweiten Innenlöcher (14b, 15b, 16b, 17b) gebildet sind.

5. Lüftungsaggregat (1) nach Anspruch 3, wobei das Gehäuse (10) einen ersten Abschnitt (10a) mit einer halbzylindrischen Form, einen zweiten Abschnitt (10b) in der Form eines Parallelepipedons mit einem rechteckigen Querschnitt, und einen dritten Abschnitt (10c) in der Form eines Parallelepipedons mit einem quadratischen Querschnitt aufweist, wobei diese Abschnitte miteinander verbunden sind.

6. Lüftungsaggregat (1) nach Anspruch 5, wobei der zweite Abschnitt (10b) an einem Ende mit dem ersten Abschnitt (10a) verbunden ist, um eine L-förmige Struktur zu bilden, und an dem Ende, das dem ersten Abschnitt (10a) gegenüberliegt, mit dem dritten Abschnitt (10c) verbunden ist, der deshalb eine Verlängerung desselben ausbildet, wobei die L-förmige Struktur die Positionierung eines Lüfters (2) begünstigt, der mit einer Ansaugleitung (2a) und einer Ablaufleitung (2b) ausgestattet ist, die zueinander um 90° angeordnet sind.

7. Lüftungsaggregat (1) nach Anspruch 6, wobei der erste Abschnitt (10a) im Wesentlichen leer ist und zum Verbinden der Ablaufleitung (2b) des Lüfters (2) die gesagte erste Öffnung (11) aufweist.

8. Lüftungsaggregat (1) nach Anspruch 6, wobei der zweite Abschnitt (10b) zum Verbinden der Ansaugleitung (2a) des Lüfters (2), der vier ersten Innenlöcher (14a, 15a, 16a, 17a) und der Ablenkplatte (13) die zweite Öffnung (12) aufweist, wobei die Ablenkplatte (13) so angeordnet ist, dass sie von den ersten Innenlöchern die mittleren Löcher (15a, 16a) sowie die zweiten Öffnung (12) innerlich umgibt.

9. Lüftungsaggregat (1) nach Anspruch 6, wobei der dritte Abschnitt (10c) die vier zweiten Innenlöcher (14b, 15b, 16b, 17b), die zu den vier ersten Innenlöchern (14a, 15a, 16a, 17a) gehören und ihnen zugewandt sind, und das erste Außenloch (18) und/oder zweite Außenloch (19) und drittes Außenloch (20) aufweist, wobei das erste Außenloch (18) und/oder das zweite Außenloch an der Seite gelagert sind, die der Seite gegenüberliegt, welche die vier zweiten Innenlöcher (14b, 15b, 16b, 17b) aufweist, wobei das dritte Außenloch (20) an der Seite angeordnet ist, die der Seite gegenüberliegt, mit welcher der dritte Abschnitt (10c) auf dem Boden ruht, und wobei eine erste Trennwand (21) und/oder eine zweite Trennwand (22) stromaufwärts und stromabwärts des ersten Außenlochs (18) angeordnet sind.

10. Lüftungsaggregat (1) nach Anspruch 9, wobei der dritte Abschnitt (10c) zudem eine Verschlussplatte (23) aufweist, die an das erste Außenloch (18) angelegt werden kann.

11. Lüftungsaggregat (1) nach Anspruch 9, wobei die erste Trennwand (21) beweglich ist.

12. Anlage (5) zur Behandlung von organischem Abfall, **dadurch gekennzeichnet, dass** sie ein Lüftungsaggregat (1) nach einem der Ansprüche 1 bis 11 umfasst.

13. Anlage nach Anspruch 12, wobei das Lüftungsaggregat (1) ausgelegt ist, um Luft aus der Umgebung außerhalb der Anlage anzusaugen.

14. Anlage nach Anspruch 12, wobei das Lüftungsaggregat (1) ausgelegt ist, um gebrauchte Luft aus der Umgebung innenhalb der gesagten Anlage (5) anzusaugen.

## Revendications

1. Groupe de ventilation (1) pour inversion de flux, comprenant un ventilateur (2) associé à une enceinte (10) à l'intérieur de laquelle se trouvent définie :
- une première chambre (C1) recevant le flux produit par le ventilateur (2) ;
- une deuxième chambre (C2) à partir de laquelle le flux est aspiré dans le ventilateur (2) ;
- une première paire de voies d'écoulement (P1, P4) destinée au flux de ventilation, associée à ladite première chambre (C1) ;
- une seconde paire de voies d'écoulement (P2, P3) destinée au flux de ventilation, associée à ladite deuxième chambre (C2) ;
- une troisième chambre (C3) associée à une première voie d'écoulement (P1) de ladite première paire de voies d'écoulement (P1, P4) et à une première voie d'écoulement (P2) de ladite seconde paire de voies d'écoulement (P2, P3) ;
- une quatrième chambre (C4) associée à une seconde voie d'écoulement (P4) de ladite première paire de voies d'écoulement (P1, P4) et à une seconde voie d'écoulement (P3) de ladite seconde paire de voies d'écoulement (P2, P3) ;
dans lequel lesdites voies d'écoulement (P1, P2, P3, P4) sont interceptées par des vannes correspondantes (V1, V2, V3, V4) qui peuvent prendre, par paires, une configuration fermée ou ouverte de telle sorte que seulement une voie d'écoulement à la fois soit activée dans chaque paire de voies d'écoulement, tandis que les deux autres voies d'écoulement sont désactivées, **caractérisé en ce que** lesdites vannes (V1, V2, V3, V4) sont commandées par un actionneur unique (3) et sont des vannes régulatrices à papillon agencées en ligne et orientées à 90° l'une par rapport à l'autre.

2. Groupe de ventilation (1) selon la revendication 1, dans lequel ladite troisième chambre (C3) est divisée en deux chambres secondaires (C31, C32) une première chambre secondaire (C31) étant associée à ladite première voie d'écoulement (P1) de ladite première paire de voies d'écoulement (P1, P4) et une deuxième chambre secondaire (C32) étant associée à ladite première voie d'écoulement (P2) de ladite seconde paire de voies d'écoulement (P2, P3).

3. Groupe de ventilation (1) selon la revendication 1 ou 2, dans lequel ladite enceinte (10) comporte:
- un déflecteur (13) définissant, à l'extérieur, ladite première chambre (C1) et définissant, à l'intérieur, ladite deuxième chambre (C2) ;
- une première ouverture (11) et une seconde ouverture (12) pour connecter ledit ventilateur (2) à ladite enceinte (10), ladite première ouverture (11) et ladite seconde ouverture (12) étant associées, respectivement, à ladite première chambre (C1) et à ladite deuxième chambre (C2) ;
- un premier trou extérieur (18) associé à un chemin de ladite seconde paire de voies d'écoulement (P2, P3) et/ou un deuxième trou extérieur (19) associé à une voie d'écoulement de ladite première paire de voies d'écoulement (P1, P4) et à une voie d'écoulement de ladite seconde paire de voies d'écoulement (P2, P3), et un troisième trou extérieur (20) associé à une voie d'écoulement de ladite première paire de voies d'écoulement (P1, P4) ;
- des premiers trous intérieurs (14a, 15a, 16a, 17a) et des seconds trous intérieurs (14b, 15b, 16b, 17b) faisant face aux dits premiers trous intérieurs (14a, 15a, 16a, 17b), chacun desdits premiers et seconds trous intérieurs étant associés à l'une desdites voies d'écoulement correspondantes (P1, P2, P3, P4).

4. Groupe de ventilation (1) selon la revendication 3, dans lequel lesdites vannes (Vi, V2, V3, V4) sont montées dans des embases formées par lesdits premiers trous intérieurs (14a, 15a, 16a, 17a) et lesdits seconds trous intérieurs (14b, 15b, 16b, 17b).

5. Groupe de ventilation (1) selon la revendication 3, dans lequel ladite enceinte (10) comprend une première section (10a) présentant une forme semi-cylindrique, une deuxième section (10b) configurée sous la forme d'un parallélépipède présentant une section transversale rectangulaire, et une troisième section (10c) configurée sous la forme d'un parallélépipède présentant une section transversale carrée, lesdites sections étant raccordées l'une à l'autre.

6. Groupe de ventilation (1) selon la revendication 5, dans lequel ladite deuxième section (10b) est raccordée, au niveau d'une extrémité, à ladite première section (10a) de façon à former une structure configurée en L, et est raccordée, au niveau de l'extrémité opposée par rapport à ladite première section (10a), à ladite troisième section (10c), laquelle, en conséquence, en forme son prolongement, ladite structure configurée en L favorisant le positionnement d'un ventilateur (2) pourvu d'un conduit d'aspiration (2a) et d'un conduit de sortie (2b) disposés à 90° l'un par rapport à l'autre.

7. Groupe de ventilation (1) selon la revendication 6, dans lequel ladite première section (10a) est essentiellement vide et comporte ladite première ouverture (11) en vue du raccordement du conduit de sortie (2b) du ventilateur (2).

8. Groupe de ventilation (1) selon la revendication (6), dans lequel ladite deuxième section (10b) comprend ladite seconde ouverture (12) permettant un raccordement du conduit d'aspiration (2a) du ventilateur (2), lesdits quatre premiers trous intérieurs (14a, 15a, 16a, 17a) et ledit déflecteur (13), ledit déflecteur (13) étant placé de telle sorte qu'il enferme intérieurement les trous centraux (15a, 16a) parmi lesdits quatre premiers trous intérieurs de même que ladite seconde ouverture (12).

9. Groupe de ventilation (1) selon la revendication 6, dans lequel ladite troisième section (10c) comporte lesdits quatre seconds trous intérieurs (14b, 15b, 16b, 17b) correspondant et faisant face aux quatre premiers trous intérieurs (14a, 15a, 16a, 17a) et ledit premier trou extérieur (18) et/ou le deuxième trou extérieur (19) et le troisième trou extérieur (20), lesdits premier (18) et/ou deuxième (19) trous extérieurs étant situés sur la face opposée à celle qui possède lesdits quatre seconds trous intérieurs (14b, 15b, 16b, 17b), ledit troisième trou extérieur (20) étant placé sur la face opposée à la face par laquelle ladite troisième section (10c) repose sur le sol, et dans lequel une première cloison (21) et/ou une seconde cloison (22) sont prévues en amont et en aval dudit premier trou extérieur (18).

10. Groupe de ventilation (1) selon la revendication 9, dans lequel ladite troisième section (10c) comprend, de plus, une plaque de fermeture (23) qui peut être placée sur ledit premier trou extérieur (18).

11. Groupe de ventilation (1) selon la revendication 9, dans lequel ladite première cloison (21) est amovible.

12. Installation (5) permettant le traitement de déchets organiques, **caractérisée en ce qu'**elle comporte un groupe de ventilation (1) selon l'une quelconque des revendications 1 à 11.

13. Installation selon la revendication 12, dans laquelle le groupe de ventilation (1) est configuré de façon à aspirer de l'air à partir de l'environnement extérieur de ladite installation.

14. Installation selon la revendication 12, dans laquelle le groupe de ventilation (1) est configuré de façon à aspirer de l'air à évacuer à partir de l'environnement intérieur de ladite installation (5).
